# EUROPÄISCHE PATENTSCHRIFT

(11) **EP 3 651 904 B1**
(45) Veröffentlichungstag und Bekanntmachung des Hinweises auf die Patenterteilung: **18.12.2024**
(21) Anmeldenummer: 18737239.6
(22) Anmeldetag: 02.07.2018
(51) Int. Cl.: B01L 3/02, G01N 35/10

(54) **INTEGRIERTE MOTORKASSETTE ZUM ANSCHLUSS AN UND ZUR VERWENDUNG IN EINEM PIPETTIERSYSTEM, PIPETTIERSYSTEM, UND VERFAHREN ZUM AUSTAUSCHEN EINER INTEGRIERTEN MOTORKASSETTE EINES PIPETTIERSYSTEMS**
INTEGRATED MOTOR CASSETTE FOR CONNECTION TO AND FOR USE IN A PIPETTING SYSTEM, PIPETTING SYSTEM, AND METHOD FOR EXCHANGING AN INTEGRATED MOTOR CASSETTE OF A PIPETTING SYSTEM
CASSETTE DE MOTEUR INTÉGRÉE DESTINÉE À ÊTRE RACCORDÉE ET UTILISÉE DANS UN SYSTÈME DE PIPETAGE, SYSTÈME DE PIPETAGE ET PROCÉDÉ DE REMPLACEMENT D'UNE CASSETTE DE MOTEUR INTÉGRÉE D'UN SYSTÈME DE PIPETAGE

(30) Priorität: 13.07.2017 DE 102017115796
(43) Veröffentlichungstag der Anmeldung: 20.05.2020
(73) Patentinhaber: Hamilton Bonaduz AG, 7402 Bonaduz (CH)
(72) Erfinder: ROMER, Hanspeter, 8340 Hinwil (CH); GYSEL, Fridolin, 8134 Adliswil (CH); WALPEN, Silvio, 8712 Stäfa (CH); ETTINGER, Reto, 8610 Uster (CH)
(74) Vertreter: Schmitt-Nilson Schraud Waibel Wohlfrom Patentanwälte Partnerschaft mbB
(86) Internationale Anmeldenummer: PCT/EP2018/067822
(87) Internationale Veröffentlichungsnummer: WO 2019/011698

(56) Entgegenhaltungen:
- EP-A1- 1 614 468
- WO-A1-2005/079989
- WO-A1-2014/027100
- DE-A1- 102015 214 566
- JP-A- 2012 167 968
- US-A1- 2009 000 350

## Beschreibung

Die vorliegende Erfindung ist auf dem Gebiet von Pipettiersystemen und deren Komponenten. Insbesondere betrifft die vorliegende Erfindung Pipettiersysteme, bei denen über ein Druckluftvolumen Pipettierflüssigkeit aspiriert bzw. dispensiert wird.

Moderne Pipettiersysteme sind hoch komplexe technische Systeme. Ein Beispiel eines Pipettiersystems ist in WO 2011/083125 A1 offenbart.

WO 2014/027100 A1 offenbart eine Pipettiervorrichtung mit einem Kolben-Zylinder-System, umfassend einen sich längs einer Zylinderachse erstreckenden Zylinder, einen Kolben und einen durch den Zylinder und den Kolben begrenzten und mit einem Arbeitsfluid gefüllten Arbeitsraum, zur Änderung eines Drucks des Arbeitsfluids an einer zur Ankopplung einer Pipettierspitze ausgebildeten Kopplungsstelle, welche Druck übertragend mit dem Arbeitsraum verbunden ist, durch Relativbewegung des Kolbens relativ zu dem Zylinder längs einer Relativbewegungsbahn, wobei der Kolben linearmotorisch zur Relativbewegung relativ zum Zylinder antreibbar ist und hierzu wenigstens eine Kolbenmagnetanordnung aufweist, und wobei weiter am Zylinder wenigstens eine Zylindermagnetanordnung vorgesehen ist, wobei wenigstens eine Magnetanordnung aus Kolbenmagnetanordnung und Zylindermagnetanordnung eine Reihe von Elektromagneten umfasst, die mittels eines Steuergeräts der Pipettiervorrichtung zur Erzeugung eines längs der Relativbewegungsbahn wandernden Magnetfelds bestrombar ist, um dadurch die zum Bewirken der Relativbewegung notwendige magnetische Antriebskraft bereitzustellen, wobei die Pipettiervorrichtung radial außerhalb der Kolbenmagnetanordnung und der Zylindermagnetanordnung eine magnetische Abschirmung aufweist, welche das radial außerhalb des Ortes der Abschirmung vorhandene Magnetfeld, das von wenigstens einer Magnetanordnung aus Kolbenmagnetanordnung und Zylindermagnetanordnung ausgeht, im Vergleich zu einem Zustand ohne Abschirmung schwächt.

Moderne Pipettiersysteme sind darauf ausgelegt, sehr kleine Mengen von Pipettierflüssigkeit in hoher Geschwindigkeit und mit hoher Genauigkeit zu aspirieren und zu dispensieren. Außerdem sind oft eine Vielzahl von Pipettierspitzen in einem Rastar angeordnet, um eine Vielzahl von Pipettieroperationen gleichzeitig ausführen zu können. Für die Aspiration bzw. Dispensation durch jede einzelne Pipettierspitze ist ein zugehöriger Elektromotor verantwortlich. So ergibt sich eine komplexe Anordnung, die auf engem Raum für hohe Präzision und hohe Geschwindigkeit sorgen soll. Solche komplexen Pipettiersysteme sind häufig schwierig zu warten.

Demzufolge wäre es wünschenswert, Komponenten für Pipettiersysteme und Pipettiersysteme bereitzustellen, die eine Wartung vereinfachen.

Beispielhafte Ausführungsformen der Erfindung umfassen eine integrierte Motorkassette gemäß Anspruch 1, ein Pipettiersystem gemäß Anspruch 10 und ein Verfahren zum Austauschen einer integrierten Motorkassette eines Pipettiersystems gemäß Anspruch 14. Weitere Ausführungsformen der Erfindung finden sich in den abhängigen Ansprüchen.

Beispielhafte Ausführungsformen der Erfindung umfassen eine integrierte Motorkassette zum Anschluss an und zur Verwendung in einem Pipettiersystem, aufweisend ein Gehäuse; ein Führungsrohr; einen mit einer Mehrzahl von Permanentmagneten versehenen Kolben, wobei der Kolben eine Druckrohr-zugewandte Seite und eine Druckrohr-abgewandte Seite hat, wobei der Kolben in dem Führungsrohr angeordnet ist und wobei der Kolben zumindest eine Abdichtung gegenüber dem Führungsrohr aufweist; und eine Spulenanordnung, durch welche der Kolben bei Strombeaufschlagung der Spulenanordnung in dem Führungsrohr bewegbar ist; wobei das Führungsrohr, der Kolben und die Spulenanordnung in dem Gehäuse angeordnet sind. Die integrierte Motorkassette umfasst weiterhin einen Druckrohr-Anschluss, mit dem das Führungsrohr auf der Druckrohr-zugewandten Seite des Kolbens an ein Druckrohr des Pipettiersystems gasdicht anschließbar ist; und einen Stromanschluss, der mit der Spulenanordnung gekoppelt ist und an eine außerhalb der integrierten Motorkassette angeordnete Stromversorgung koppelbar ist; wobei die integrierte Motorkassette als Einheit in das Pipettiersystem einbringbar und aus dem Pipettiersystem entfernbar ist.

Beispielhafte Ausführungsformen der Erfindung ermöglichen den Austausch eines Elektromotors eines Pipettiersystems als Kompletteinheit. Dadurch dass der Kolben mit einer Mehrzahl von Permanentmagneten, das Führungsrohr und die Spulenanordnung in einem gemeinsamen Gehäuse angeordnet sind, kann die Gesamtheit dieser Bauteile durch einen mechanisch leicht vorzunehmenden Wechsel des Gehäuses ausgetauscht werden. Der Druckrohr-Anschluss und der Stromanschluss bilden dabei zwei wohl definierte Schnittstellen, über die die integrierte Motorkassette auf der einen Seite mit Energie versorgt wird und auf der anderen Seite den durch den Kolben erzeugten Druck an ein Druckrohr des Pipettiersystems weitergeben kann. Somit ist die integrierte Motorkassette eine vergleichsweise leicht austauschbare Einheit, die über ihre definierten Schnittstellen die Funktionen der Stromaufnahme und der Bereitstellung von Luftdruck ermöglicht. Somit kann ein Elektromotor des Pipettiersystems als integrierte Kompletteinheit ausgetauscht werden und die Wartung des Pipettiersystems wesentlich vereinfacht werden.

Über den Druckrohr-Anschluss ist das Führungsrohr auf der Druckrohr-zugewandten Seite des Kolbens mit einem Druckrohr des Pipettiersystems gasdicht verbindbar. Auf diese Weise bilden das Führungsrohr der integrierten Motorkassette und das Druckrohr des Pipettiersystems, gegebenenfalls einschließlich einer daran angeschlossenen Pipettierspitze, ein abgeschlossenes Druckluftvolumen zum Aspirieren und Dispensieren von Pipettierflüssigkeit. Der Begriff abgeschlossenes Druckluftvolumen bezeichnet dabei ein Volumen, das nach allen Seiten abgeschlossen ist mit Ausnahme der Öffnung in der Pipettierspitze, wenn eine Pipettierspitze angeschlossen ist, bzw. mit Ausnahme des für den Anschluss der Pipettierspitze vorgesehenen Endes des Druckrohrs des Pipettiersystems. Somit hat das abgeschlossene Druckluftvolumen eine definierte Öffnung, durch die Pipettierflüssigkeit aspiriert bzw. dispensiert werden kann.

Die Spulenanordnung, das Führungsrohr und der Druckrohr-Anschluss sind ortsfest in dem Gehäuse der integrierten Motorkassetten vorhanden. Demzufolge haben diese Komponenten bei Anschluss der integrierten Motorkassette an ein Pipettiersystem feste und wohl definierte Positionen bezüglich des restlichen Pipettiersystems und können somit mit den restlichen Komponenten des Pipettiersystems zuverlässig zusammenarbeiten.

Der Kolben ist in dem Führungsrohr beweglich. Insbesondere kann der Kolben linear innerhalb des Führungsrohrs beweglich sein und sich dabei auf den Druckrohr-Anschluss zu bzw. von dem Druckrohr-Anschluss weg bewegen. Somit haben der Kolben und das Führungsrohr jeweils eine Druckrohr-zugewandte Seite und eine Druckrohr-abgewandte Seite. Auch bei dem Gehäuse bzw. der integrierten Motorkassette an sich kann man von einer Druckrohr-zugewandten Seite und einer Druckrohr-abgewandten Seite sprechen.

Der Druckrohr-Anschluss kann Teil des Führungsrohrs sein, d.h. eine mit dem Führungsrohr integral geformte Einheit bilden, oder eine an das Führungsrohr anschließende Struktur sein. Im letzteren Fall sind der Druckrohr-Anschluss und das Führungsrohr gasdicht miteinander verbunden, so dass bei Anschluss an das Druckrohr des Pipettiersystems das oben beschriebene abgeschlossene Druckluftvolumen gebildet wird.

Die Spulenanordnung weist eine Mehrzahl von Spulen auf, die entlang des Führungsrohrs angeordnet sind. Bei Stromdurchfluss interagieren die Mehrzahl der Spulen mit der Mehrzahl von Permanentmagneten des Kolbens. Auf diese Weise kann der Kolben schnell und präzise innerhalb des Führungsrohrs bewegt werden, wie dies dem Fachmann an sich bekannt ist.

Neben der leichten mechanischen Handhabbarkeit kann das Gehäuse eine effektive Abschirmung des Magnetfelds innerhalb der integrierten Motorkassette bewirken. Auch kann das Gehäuse für die Magnetfelder in der integrierten Motorkassette genutzt werden. Zum Beispiel kann ein magnetischer Rückschluss durch das Gehäuse und somit eine Verstärkung der Motorkraft stattfinden. Die Spulen und/oder der Strom durch die Spulen können auf diese Weise geringer ausgelegt werden.

Gemäß einer weiteren Ausführungsform ist der Druckrohr-Anschluss zur Lagefixierung der integrierten Motorkassette gegenüber dem Pipettiersystem ausgebildet. In anderen Worten, der Druckrohr-Anschluss kann ausgebildet sein, die integrierte Motorkassette gegenüber dem Pipettiersystem auszurichten. Auf diese Weise schafft der Druckrohr-Anschluss nicht nur eine gasdichte Verbindung zu einem Druckrohr des Pipettiersystems, sondern trägt auch zur korrekten Positionierung der integrierten Motorkassette in dem Pipettiersystem bei, wodurch das präzise Zusammenwirken zwischen dem Kolben in dem Führungsrohr und dem Druckluftvolumen in dem Druckrohr des Pipettiersystems ermöglicht wird. Wie unten im Detail beschrieben, kann die integrierte Motorkassette neben dem Druckrohr-Anschluss weitere Komponenten zur Lagefixierung/Ausrichtung haben.

Gemäß einer weiteren Ausführungsform weist der Druckrohr-Anschluss eine Aufnahme für eine Motor-zugewandte Seite des Druckrohrs auf. Die Aufnahme des Druckrohr-Anschlusses kann eine Ausnehmung, insbesondere eine zylindrische Ausnehmung sein. Es kann sich somit um eine hohlzylindrische Aufnahme auf Seiten der integrierten Motorkassette handeln. Eine solche zylindrische Ausnehmung ist geeignet zur Aufnahme eines zylindrischen Druckrohrs.

Gemäß einer weiteren Ausführungsform weißt die Aufnahme eine Kontaktfläche für einen um das Druckrohr herum angeordneten O-Ring auf. Ein O-Ring ist ein vergleichsweise einfaches und effektives Mittel zur Schaffung des luftdichten Anschlusses zwischen dem Druckrohr des Pipettiersystems und dem Druckrohr-Anschluss der integrierten Motorkassette, und damit mittelbar zu dem Führungsrohr der integrierten Motorkassette. Die Kontaktfläche des Druckrohr-Anschlusses für den O-Ring kann eine umlaufende Nut aufweisen, die den O-Ring in Position hält. Es kann aber auch sein, dass der O-Ring durch die Ausführung des Druckrohrs an einer bestimmten Stelle vorgesehen ist. In diesem Fall kann die Kontaktfläche für den O-Ring eine Teilfläche der Aufnahme, insbesondere eine Teilfläche der zylindrischen Ausnehmung, sein.

Gemäß einer weiteren Ausführungsform ist der Stromanschluss als Anschlussprint ausgeführt. Bei einem Anschlussprint handelt es sich um eine robuste und räumlich definierte Struktur, die sich gut in die integrierte Motorkassette einbauen lässt und zu einem insgesamt robusten Aufbau der integrierten Motorkassette beiträgt.

Gemäß einer weiteren Ausführungsform ist der Anschlussprint innerhalb des Gehäuses entlang des Führungsrohrs geführt. Auf diese Weise kann der Anschlussprint bequem mit der Mehrzahl von Spulen verbunden werden, die ebenfalls entlang des Führungsrohrs angeordnet sind.

Gemäß einer weiteren Ausführungsform ist der Anschlussprint in einem Druckrohr-abgewandten Endbereich der integrierten Motorkassette durch das Gehäuse geführt. Auf diese Weise ist die Verbindung des Stromanschlusses nach außerhalb der integrierten Motorkassette in einem Bereich vorgesehen, der gut zugänglich ist und nicht so Platz-kritisch ist wie andere Außenbereiche der integrierten Motorkassette. Das ist insbesondere der Fall, wenn die integrierte Motorkassette in einem Raster neben anderen gleichartigen integrierten Motorkassetten angeordnet ist.

Erfindungsgemäß weist die integrierte Motorkassette weiterhin eine Mehrzahl von Magnetfeld-Sensoren auf, die innerhalb des Gehäuses entlang des Führungsrohrs zur Positionsbestimmung des Kolbens angeordnet sind. Die Mehrzahl von Magnetfeld-Sensoren sind ortsfest in dem Gehäuse angeordnet. Die Magnetfeld-Sensoren können zum Beispiel Hall-Sensoren sein. Magnetfeld-Sensoren sind ein effektives Mittel, um die Position des Kolbens in dem Führungsrohr zu bestimmen und auf Basis dieser Information den Kolben und damit das Aspirieren Dispensieren von Pipettierflüssigkeit zu steuern und zu überwachen. Durch das Vorsehen von Magnetfeld-Sensoren in der integrierten Motorkassette kann auch dieses System zur Positionsbestimmung bequem zusammen mit dem Elektromotor ausgetauscht werden.

Gemäß einer weiteren Ausführungsform weist die integrierte Motorkassette weiterhin einen Sensordatenanschluss auf, der mit der Mehrzahl von Magnetfeld-Sensoren gekoppelt ist und an eine außerhalb der integrierten Motorkassette angeordnete Steuereinheit des Pipettiersystems koppelbar ist. Auf diese Weise wird eine weitere definierte Schnittstelle bereitgestellt, über die die integrierte Motorkassette in das Gesamtkonstrukt des Pipettiersystems eingebunden wird. Die Sensordaten zur Positionsbestimmung des Kolbens können somit aus der integrierten Motorkassette hinaus transportiert werden, wo eine Steuereinheit des Pipettiersystems auf Basis der verfügbaren Daten die Steuerung der Aspirations- bzw. Dispensationsvorgänge einer Vielzahl von Pipettiereinheiten zentral steuern kann. Es ist aber auch möglich, dass die Daten der Magnetfeld-Sensoren innerhalb der integrierten Motorkassette ausgewertet werden. In diesem Fall ist es möglich, dass kein Sensordatenanschluss vorhanden ist oder dass ein reduzierter Datenanschluss vorhanden ist, über den lediglich die Position des Kolbens an die Steuereinheit kommuniziert wird.

Erfindungsgemäß weist die integrierte Motorkassette weiterhin ein Speicherelement auf. Das Speicherelement kann vielfältig verwendet werden, z.B. für die Speicherung von Sensordaten oder für die Speicherung von Kalibrierungsdaten, wie unten im Detail beschrieben.

Erfindungsgemäß ist das Speicherelement mit Kalibrierungsdaten versehen, wobei die Kalibrierungsdaten eine Korrelation zwischen Messwerten der Magnetfeld-Sensoren und der Position des Kolbens beschreiben. Die Kalibrierungsdaten können derart sein, dass sich aus der Zusammenschau der Messwerte der Magnetfeld-Sensoren und der Kalibrierungsdaten die Position des Kolbens in dem Führungsrohr sehr präzise ermitteln lässt. Durch das Vorliegen der Kalibrierungsdaten kann der aus Kolben und Spulenanordnung bestehende Elektromotor unmittelbar präzise betrieben werden, ohne dass ein Fahren des Kolbens zu einer Referenzposition oder eine ähnliche Initialisierungsroutine nötig wären. Der Elektromotor der integrierten Motorkassette ist nach Anschluss der integrierten Motorkassette an das Pipettiersystem sofort einsetzbar. Die Kalibrierungsdaten können das Resultat eines bei der Herstellung der integrierten Motorkassette durchgeführten Kallibrierungsprozesses sein, d.h. das Resultat eines vor dem Anschließen der integrierten Motorkassette an das Pipettiersystem durchgeführten Kallibrierungsprozesses sein. Somit stellt die integrierte Motorkassette eine leicht austauschbare und unmittelbar verwendbare Kompletteinheit dar, die beim Anschluss an das Pipettiersystem nicht extra angepasst und kalibriert werden muss. Die Korrelation zwischen Messwerten der Magnetfeld-Sensoren und der Position des Kolbens kann in Form einer Look-Up-Tabelle oder als formelmäßige Beschreibung oder in jeder anderen geeigneten Form vorliegen.

Gemäß einer weiteren Ausführungsform beinhalten die Kalibrierungsdaten weiterhin eine Beschreibung des Einflusses des Stromflusses der Spulenanordnung auf die Messwerte der Magnetfeld-Sensoren. Diese Beschreibung des Einflusses des Stromflusses der Spulenanordnung kann als Look-Up-Tabelle oder als formelmäßige Beschreibung oder in jeder anderen geeigneten Art vorliegen. Auf Basis dieser Beschreibung kann der Einfluss, den das Magnetfeld der Spulenanordnung auf die Messwerte der Magnetfeld-Sensoren hat, herausgerechnet werden. Auf diese Weise kann aus den Messwerten der Magnetfeld-Sensoren auf besonders zuverlässige Weise auf die Position des Kolbens in dem Führungsrohr geschlossen werden. Insbesondere kann eine Steuereinheit, welche den Stromfluss zu den Spulen der Spulenanordnung steuert, den Einfluss dieses Stromflusses auf das Magnetfeld direkt aus den Messwerten entfernen.

Gemäß einer weiteren Ausführungsform sind die Kalibrierungsdaten von einer Steuereinheit des Pipettiersystems auslesbar. Insbesondere können die Kalibrierungsdaten über den oben beschriebenen Sensordatenanschluss auslesbar sein. Somit ist für die Übertragung der Messwerte der Mehrzahl von Magnetfeld-Sensoren und der Kalibrierungsdaten nur ein Datenanschluss vorgesehen, was für den Platzbedarf und die Komplexität der integrierten Motorkassette günstig ist. Es ist aber auch möglich, dass die Kalibrierungsdaten über einen separaten Kalibrierungsdatenanschluss auslesbar sind.

Gemäß einer weiteren Ausführungsform weist die Spulenanordnung eine Mehrzahl von Spulen auf, die kreisförmig um das Führungsrohr angeordnet sind. Durch diese unmittelbare Anordnung um das Führungsrohr herum kann der Kolben mit hoher Effizienz in dem Führungsrohr bewegt werden.

Gemäß einer weiteren Ausführungsform ist das Gehäuse aus einem weichmagnetischen Material, insbesondere aus einer weichmagnetischen Nickel-Eisen-Legierung, hergestellt. Ein weichmagnetisches Material, insbesondere eine weichmagnetische Nickel-Eisen-Legierung, eignet sich besonders gut als magnetische Abschirmung sowie zur Bereitstellung des magnetischen Rückschlusses durch das Gehäuse.

Gemäß einer weiteren Ausführungsform ist die Größe des Gehäuses auf das Raster des Pipettiersystems, insbesondere auf ein normiertes Rastermaß, abgestimmt. Somit kann die integrierte Motorkassette bequem in allen Pipettiersystem eingesetzt werden, die mit einer Vielzahl von Pipettiereinheiten in einem vorbestimmten Raster, insbesondere in einem normierten Raster, arbeiten. Insbesondere können bei einem Pipettiersystem mit einer Mehrzahl von Druckrohren, welche in einem Raster angeordnet sind, eine Mehrzahl von integrierten Motorkassetten nebeneinander angeordnet werden. Bei Bedarf können einzelne integrierte Motorkassetten ausgetauscht werden, wobei die Wartung auch dadurch vereinfacht ist, dass die um die auszutauschende integrierte Motorkassette herumliegenden integrierten Motorkassetten durch ihre jeweiligen Gehäuse unempfindlich gegenüber der stattfindenden Wartung sind.

Gemäß einer weiteren Ausführungsform hat das Gehäuse einen im Wesentlichen rechteckigen Querschnitt. Durch den im Wesentlichen rechteckigen Querschnitt kann die integrierte Motorkassette bequem in ein Raster des Pipettiersystems eingebracht werden. Das Merkmal, dass das Gehäuse einen im Wesentlichen rechteckigen Querschnitt hat, bedeutet nicht, dass ein solcher Querschnitt entlang der gesamten Länge der integrierten Motorkassette vorhanden sein muss. Vielmehr besagt das Merkmal, dass der Querschnitt mindestens entlang eines großen Teils der Haupterstreckungsrichtung der integrierten Motorkassette, beispielsweise mindestens entlang 80% der Länge der integrierten Motorkassette, im Wesentlichen rechteckig ist. Die Haupterstreckungsrichtung der integrierten Motorkassette entspricht der Erstreckungsrichtung des Führungsrohrs.

Gemäß einer weiteren Ausführungsform hat das Gehäuse im Querschnitt eine Fläche zwischen 50 mm² und 200 mm², insbesondere zwischen 100 mm² und 150 mm², weiter insbesondere zwischen 130 mm² und 140 mm².

Gemäß einer weiteren Ausführungsform hat die längere Seite des im Wesentlichen rechteckigen Querschnitts eine Länge zwischen 12 mm und 20 mm, insbesondere zwischen 14 mm und 18 mm, weiter insbesondere zwischen 15 mm und 16 mm.

Gemäß einer weiteren Ausführungsform hat die kürzere Seite des im Wesentlichen rechteckigen Querschnitts eine Länge von weniger als 9 mm, insbesondere eine Länge zwischen 7 mm und 9 mm, weiter insbesondere zwischen 8 mm und 9 mm. Bei einer maximalen Länge von unter 9 mm der kürzeren Seite des im Wesentlichen rechteckigen Querschnitts kann die integrierte Motorkassette bequem in gängige Rastermaße eingefügt werden .

Gemäß einer weiteren Ausführungsform hat der Kolben eine Abdichtung gegenüber dem Führungsrohr auf der Druckrohr-zugewandten Seite. Es ist weiterhin möglich, dass der Kolben eine weitere Abdichtung gegenüber dem Führungsrohr auf der Druckrohr-abgewandten Seite hat. Auf diese Weise werden zwei Abdichtungen des Kolbens gegenüber dem Führungsrohr bereitgestellt, und ein symmetrisches Laufverhalten des Kolbens in Richtung Druckrohr und von dem Druckrohr weg kann bereitgestellt werden.

Gemäß einer weiteren Ausführungsform ist der vollständige Fahrweg des Kolbens innerhalb des Gehäuses. Auf diese Weise ist der Kolben in jeglicher Position durch das Gehäuse mechanisch vor Außeneinflüssen geschützt. Außerdem werden auf diese Weise durch den Kolben ausgeübte Rastmomente auf das Führungsrohr und die anderen Komponenten minimiert.

Gemäß einer weiteren Ausführungsform ist auf der Druckrohr-abgewandten Seite des Führungsrohrs ein Anschlag für den Kolben oder ein Luftfilter oder eine integrierte Anschlag-Luftfilter-Einheit vorgesehen. Durch den Anschlag kann der Kolben effektiv in seiner Bewegung begrenzt werden, es gibt ein definiertes Ende des benutzen Teils des Führungsrohrs. Somit ist sichergestellt, dass der Kolben nicht mit den anderen, in dem Gehäuse vorgesehenen Komponenten in ungewollter Weise interagieren kann. Der Luftfilter ist ein wirksames Mittel, das Führungsrohr frei von äußeren Einflüssen, wie z.B. von Staub, zu halten, so dass die präzise und gegenüber dem Führungsrohr abgedichtete Bewegung des Kolbens über einen langen Zeitraum zuverlässig gewährleistet werden kann.

Gemäß einer weiteren Ausführungsform weist die integrierte Motorkassette weiterhin einen innerhalb des Gehäuses angeordneten Temperatursensor zur Temperaturmessung innerhalb der integrierten Motorkassette auf. Weiterhin kann die integrierte Motorkassette einen Datenanschluss zur Übertragung von Temperaturmesswerten aufweisen. Dabei kann es sich um einen separaten Datenanschluss handeln. Es ist aber auch möglich das der oben beschriebene, für die Magnetfeld-Daten vorgesehen Sensordatenschluss für die Übermittlung der Temperaturmessungen mitbenutzt wird. Über den Temperatursensor kann festgestellt werden, ob der Elektromotor innerhalb der integrierten Motorkassette überbelastet wird. Auf Basis dieser Information kann der Stromfluss durch die Spulen der Spulenanordnung beendet werden, bevor der Elektromotor der integrierten Motorkassette Schaden nimmt. Gerade in dem abgeschlossenen System der integrierten Motorkassette ist die Beobachtbarkeit der Temperatur besonders wertvoll, weil die Komponenten durch das Gehäuse von der Außenwelt abgeschirmt sind und nicht in Augenschein genommen werden können.

Gemäß einer weiteren Ausführungsform weist die integrierte Motorkassette weiterhin einen Kühlungsschacht auf, der innerhalb des Gehäuses entlang des Führungsrohres angeordnet ist und eine erste Öffnung durch das Gehäuse auf der Druckrohr-zugewandten Seite des Gehäuses und eine zweite Öffnung durch das Gehäuse auf der Druckrohr-abgewandten Seite des Gehäuses hat. Somit kann das Innere des Gehäuses über einen Kühlluftfluss innerhalb des Kühlungsschachts effektiv gekühlt werden. Da die integrierte Motorkassette im Regelfall vertikal in einem Pipettiersystem angeordnet sein wird, ergibt sich durch den Kühlungsschacht von der Druckrohr-zugewandten Seite des Gehäuses zu der Druckrohr-abgewandten Seite des Gehäuses ein Kamineffekt, der eine wirksame Kühlung des Inneren des Gehäuses bewirkt.

Gemäß einer weiteren Ausführungsform der Erfindung weist die integrierte Motorkassette weiterhin eine Halterung an der Druckrohr-abgewandten Seite des Gehäuses auf, mit der die integrierte Motorkassette gegenüber dem Pipettiersystem fixierbar ist. Auf diese Weise kann die integrierte Motorkassette auf der Druckrohr-abgewandten Seite gegenüber dem Rest des Pipettiersystems gut Lage-fixiert werden. Zusammen mit der oben beschriebenen Lagefixierung der integrierten Motorkassette über den Druckrohr-Anschluss ergibt sich eine Lagefixierung der integrierten Motorkassette in ihren beiden Endbereichen, so dass eine insgesamt zuverlässige und präzise Positionierung der integrierten Motorkassette in dem Pipettiersystem auf besonders gute Weise bereitgestellt werden kann.

Gemäß einer weiteren Ausführungsform weist die Halterung eine Kontaktfläche auf, die mit einer komplementären Kontaktfläche des Pipettiersystems zur Ausrichtung der integrierten Motorkassette in Eingriff bringbar ist. Das Anlegen der Kontaktfläche an eine komplementären Kontaktfläche ermöglicht eine sehr exakte Ausrichtung der integrierten Motorkassette über die beiden Kontaktflächen.

Gemäß einer weiteren Ausführungsform weist die Halterung ein Führungselement auf, das in eine Ausnehmung des Pipettiersystems zur Ausrichtung der integrierten Motorkassette einbringbar ist. Während das Führungselement an dem Pipettiersystem anliegen kann, ist es auch möglich, dass das Führungselement in die Ausnehmung des Pipettiersystems eingebracht wird, ohne an einer Gegenfläche anzuliegen. In anderen Worten, das Führungselement kann mit Spiel in einer Ausnehmung angeordnet werden. Auf diese Weise kann das Einsetzen der integrierten Motorkassette gegenüber dem oben beschriebenen Fall von komplementären Kontaktflächen vereinfacht sein, wobei trotzdem eine gewisse Lagefixierung stattfindet.

Gemäß einer weiteren Ausführungsform weist die Halterung eine Aufnahme, insbesondere ein Loch oder Gewindeloch, zum Einführen eines an dem Pipettiersystem vorgesehenen Sicherungselements, insbesondere eines Sicherungsstifts oder einer Sicherungsschraube, auf. Über das Zusammenspiel eines Sicherungselements des Pipettiersystems und einer entsprechende Aufnahme in der Halterung der integrierten Motorkassette kann eine besonders gute Lagefixierung der integrierten Motorkassette in dem Pipettiersystem erreicht werden.

Beispielhafte Ausführungsformen der Erfindung umfassen weiterhin ein Pipettiersystem zum Aspirieren und Dispensieren von Pipettierflüssigkeit, aufweisend mindestens Druckrohr, wobei jedes des mindestens einen Druckrohrs eine Kopplungsvorrichtung zur Ankopplung einer Pipettierspitze an das jeweilige Druckrohr aufweist; und, für jedes des mindestens einen Druckrohrs, einen Motorkassettenanschluss zum Verbinden des Pipettiersystems mit jeweils einer integrierten Motorkassette nach einer der oben beschriebenen Ausführungsformen. Das Pipettiersystem weist mindestens eine integrierte Motorkassette nach einer der oben beschriebenen Ausführungsformen auf. Die Modifikation, zusätzlichen Merkmale und Effekte, die oben mit Bezug auf die integrierte Motorkassette beschrieben worden sind, sind analog auf das Pipettiersystem zum Aspirieren und Dispensieren von Pipettierflüssigkeit anwendbar. Die integrierte Motorkassette kann als Einheit in das Pipettiersystem eingebracht werden und aus diesem entfernt werden. Wenn die integrierte Motorkassette in das Pipettiersystem eingebracht ist, ist sie Bestandteil des Pipettiersystems.

Gemäß einer weiteren Ausführungsform hat das Pipettiersystem eine Vielzahl von Druckrohren. Insbesondere kann das Pipettiersystem eine Vielzahl von in einem Raster angeordneten Druckrohren haben, z.B. 96 Druckrohre. Es ist möglich, dass für alle Druckrohre des Pipettiersystems jeweils ein Motorkassettenanschluss zum Verbinden des Pipettiersystems mit einer jeweiligen integrierten Motorkassette vorhanden ist. Es ist aber auch möglich und von der Erfindung umfasst, dass für einen Teil der Druckrohre Motorkassettenanschlüsse zum Verbinden des Pipettiersystems mit jeweils einer integrierten Motorkassette vorhanden sind, während ein anderer Teil der Druckrohre mit anderen Konstruktionen von Elektromotoren verbunden ist.

Gemäß einer weiteren Ausführungsform weist der Motorkassettenanschluss einen Pipettiersystem-seitigen Druckrohr-Anschluss auf, der mit dem Druckrohr-Anschluss der integrierten Motorkassette gasdicht verbindbar ist. In einer weiteren Ausführungsform umfasst der Pipettiersystem-seitige Druckrohr-Anschluss ein freies Ende des Druckrohrs, das in eine entsprechende Aufnahme des Druckrohr-Anschlusses der integrierten Motorkassette einführbar ist. Das freie Ende des Druckrohrs kann beispielsweise ein frei stehendes Ende des Druckrohrs sein, das aus dem Gehäuse des Pipettiersystems vorsteht. Insbesondere kann das freie Ende auf der Innenseite des Gehäuses des Pipettiersystems vorstehen. So kann die integrierte Motorkassette in dem Inneren des Pipettiersystems auf das freie Ende des Druckrohrs aufgesetzt werden. Das freie Ende des Druckrohrs kann einen um das Druckrohr herum angeordneten O-Ring aufweisen.

Gemäß einer weiteren Ausführungsform weist das Pipettiersystem für jedes des mindestens einen Druckrohrs weiterhin ein Sicherungselement auf, insbesondere einen Sicherungsstift oder eine Sicherungsschraube, mit dem die integrierte Motorkassette gegenüber dem Pipettiersystem fixiert werden kann. Das Sicherungselement kann in eine entsprechende Aufnahme einer Halterung der integrierten Motorkassette, insbesondere ein Loch oder ein Gewindeloch, eingeführt bzw. eingeschraubt werden. Es ist auch möglich, dass das Sicherungselement mit einem Führungselement der Halterung der integrierten Motorkassette in Eingriff gebracht werden kann und so eine Lagefixierung stattfindet. Zum Beispiel kann eine Sicherungsschraube mit ihrem Ende gegen ein Führungselement der Halterung der integrierten Motorkassette positioniert werden, so dass das Führungselement fixiert ist.

Gemäß einer weiteren Ausführungsform weist das Pipettiersystem eine Steuereinheit auf, die eingerichtet ist, eine integrierte Motorkassette zum Aspirieren bzw. Dispensieren von Pipettierflüssigkeit anzusteuern.

Gemäß einer weiteren Ausführungsform ist die Steuereinheit mit der Spulenanordnung der integrierten Motorkassette koppelbar und eingerichtet, eine Bewegung des Kolbens zu steuern. Insbesondere kann die Steuereinheit mit dem Stromanschluss der integrierten Motorkassette verbunden sein und die Spulen der Spulenanordnung der integrierten Motorkassette über den Stromanschluss mit entsprechenden Strömen beaufschlagen und so die Bewegung des Kolbens steuern. In diesem Fall wird die Höhe des Stroms durch die Spulen von der Steuereinheit außerhalb der integrierten Motorkassette festgelegt. Es ist auch möglich, dass die Steuereinheit Steuersignale an die integrierte Motorkassette übermittelt und dass die integrierte Motorkassette in der Lage ist, die Höhe der Ströme zu den Spulen über den Stromanschluss im Einklang mit den Steuersignalen festzulegen.

Gemäß einer weiteren Ausführungsform ist die Steuereinheit mit einer Mehrzahl von Magnetfeld-Sensoren der integrierten Motorkassette koppelbar und eingerichtet, auf der Basis von Messwerten der Magnetfeld-Sensoren die Position des Kolbens zu bestimmen. Insbesondere kann die Steuereinheit mit einem Sensordatenanschluss der integrierten Motorkassette verbunden sein, um die Messwerte der Magnetfeld-Sensoren zu empfangen.

Gemäß einer weiteren Ausführungsform ist die Steuereinheit mit einem Speicherelement der integrierten Motorkassette koppelbar und eingerichtet, Daten, insbesondere Kalibrierungsdaten, aus dem Speicherelement auszulesen. Auf diese Weise kann die Steuereinheit auf die in der integrierten Motorkassette vorhandenen Daten zugreifen. Mit Hilfe der Kalibrierungsdaten kann die Steuereinheit die Spulen der Spulenanordnung der integrierten Motorkassette derart ansteuern, das eine hoch präzise Bewegung des Kolbens ermöglicht wird.

Beispielhafte Ausführungsformen der Erfindung umfassen weiterhin ein Verfahren zum Austauschen einer integrierten Motorkassette eines Pipettiersystems gemäß einer der oben beschriebenen Ausführungsformen, aufweisend die Schritte: Entfernen einer ersten integrierten Motorkassette aus dem Pipettiersystem, wobei die erste integrierte Motorkassette gemäß einer der oben beschriebenen Ausführungsformen ausgebildet ist und wobei der Schritt des Entfernens ein Lösen des Druckrohr-Anschlusses der ersten integrierten Motorkassette von einem Pipettiersystem-seitigen Druckrohr-Anschluss aufweist; und Einsetzen einer zweiten integrierten Motorkassette in das Pipettiersystem, wobei die zweite integrierte Motorkassette gemäß einer der oben beschriebenen Ausführungsformen ausgebildet ist und wobei der Schritt des Einsetzens ein Verbinden des Druckrohr-Anschlusses der zweiten integrierten Motorkassette mit dem Pipettiersystem-seitigen Druckrohr-Anschluss aufweist.

Gemäß einer weiteren Ausführungsform weist der Schritt des Entfernens der ersten integrierten Motorkassette mindestens einen der folgenden Schritte aufweist: Lösen des Stromanschlusses der ersten integrierten Motorkassette von einem Pipettiersystem-seitigen Stromanschluss, Lösen eines Sensordatenanschlusses der ersten integrierten Motorkassette von einem Pipettiersystem-seitigen Sensordatenanschluss, Lösen einer Halterung an der Druckrohr-abgewandten Seite des Gehäuses der ersten integrierten Motorkassette von dem Pipettiersystem. Weiterhin kann der Schritt des Einsetzen der zweiten integrierten Motorkassette mindestens einen der folgenden Schritte aufweisen: Verbinden des Stromanschlusses der zweiten integrierten Motorkassette mit dem Pipettiersystem-seitigen Stromanschluss, Verbinden eines Sensordatenanschlusses der zweiten integrierten Motorkassette mit dem Pipettiersystem-seitigen Sensordatenanschluss, Verbinden einer Halterung an der Druckrohr-abgewandten Seite des Gehäuses der zweiten integrierten Motorkassette mit dem Pipettiersystem.

Weitere beispielhafte Ausführungsformen der Erfindung werden nachfolgend mit Bezug auf die Figuren beschrieben.
Fig. 1 zeigt eine integrierte Motorkassette gemäß einer beispielhaften Ausführungsform der Erfindung in einer perspektivischen Ansicht;
Fig. 2 zeigt die integrierte Motorkassette der Fig. 1 in einer Längsschnittansicht;
Fig. 3 zeigt die integrierte Motorkassette der Fig. 1 in einer Querschnittansicht;
Fig. 4 zeigt ein Pipettiersystem gemäß einer beispielhaften Ausführungsform der Erfindung, in die die integrierte Motorkassette der Fig. 1 eingesetzt ist;
Fig. 5 zeigt einen Ausschnitt des Pipettiersystems der Fig. 4 in vergrößerter Darstellung;
Fig. 6 zeigt ausgewählte Komponenten des Pipettiersystems der Fig. 4 als Blockdiagramm; und
Fig. 7 zeigt eine integrierte Motorkassette gemäß einer weiteren beispielhaften Ausführungsform der Erfindung in einer Längsschnittansicht.

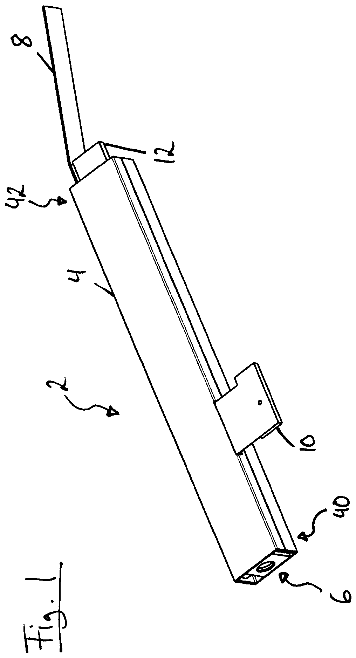

Fig. 1 zeigt eine integrierte Motorkassette 2 gemäß einer beispielhaften Ausführungsform der Erfindung in einer perspektivischen Ansicht von außen. Die integrierte Motorkassette 2 hat ein Gehäuse 4. Das Gehäuse 4 ist im Wesentlichen quaderförmig. Das Gehäuse 4 hat eine Haupterstreckungsrichtung, die in der perspektivischen Ansicht von Fig. 1 von links unten nach rechts oben verläuft. Das Gehäuse 4 hat einen Druckrohr-zugewandten Endbereich 40 und einen Druckrohr-abgewandten Endbereich 42. Die Haupterstreckungsrichtung des Gehäuses 4 läuft von dem Druckrohr-zugewandten Endbereich 40 zu dem Druckrohr-abgewandten Endbereich 42. In den zu der Haupterstreckungsrichtung senkrechten Querschnitten durch das Gehäuse 4 hat dieses einen im Wesentlichen rechteckigen Querschnitt.

In dem Druckrohr-zugewandten Endbereich 40 hat die integrierte Motorkassette 2 einen Druckrohr-Anschluss 6. Der Druckrohr-Anschluss 6 hat eine zylindrische Aufnahme, in die ein Druckrohr eines Pipettiersystems eingeführt werden kann, wie unten im Detail beschrieben. In dem Druckrohr-abgewandten Endbereich 42 weist die integrierte Motorkassette 2 ein Führungselement 12 auf. Das Führungselement 12 ist ein Fortsatz des Gehäuses 2 entlang der Haupterstreckungsrichtung, hat aber einen sehr viel kleineren Querschnitt als das Gehäuse 4. Mittels des Führungselements 12 kann die integrierte Motorkassette 2 in einem Pipettiersystem Lage-fixiert werden, wie unten im Detail beschrieben wird.

Die integrierte Motorkassette 2 weist weiterhin einen Stromanschluss 8 auf. Der Stromanschluss 8 ist ein Anschlussprint, der die in dem Gehäuse 4 vorhandenen Spulen mit Strom versorgt und der aus dem Gehäuse 4 herausragt, wie in Fig. 1 gezeigt. Der Anschlussprint 8 ist mit einer externen Stromquelle bzw. Stromversorgung verbindbar. Weiterhin weist die integrierte Motorkassette 2 einen Sensordatenanschluss 10 auf. Der Sensordatenanschluss 10 ist im Inneren des Gehäuses 4 mit einer Mehrzahl von Magnetfeld-Sensoren verbunden und ragt aus dem Gehäuse 4 heraus, wie in Fig. 1 gezeigt, um die Messwerte der Magnetfeld-Sensoren an einer außerhalb des Gehäuses 4 gelegene Steuereinheit zu übermitteln.

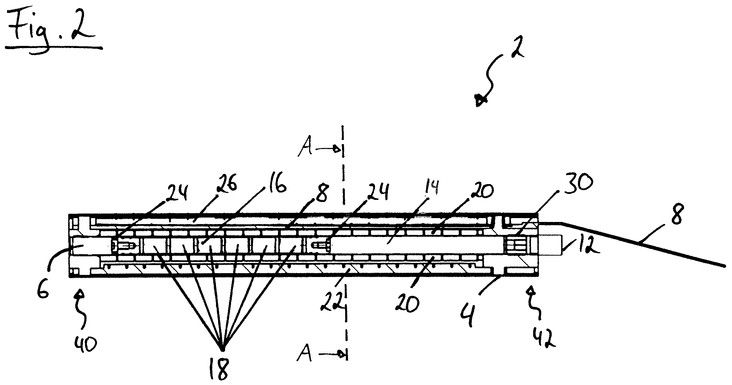

Fig. 2 zeigt einen Längsschnitt durch die integrierte Motorkassette 2 der Fig. 1. Insbesondere zeigt Fig. 2 einen Längsschnitt durch die integrierte Motorkassette 2 entlang einer Längsschnitt-Ebene, die parallel zu der in Fig. 1 als obere Ebene der integrierten Motorkassette 2 gezeigten Ebene ist. Fig. 2 zeigt das Gehäuse 4 mit seinen darin angeordneten Komponenten sowie den aus dem Gehäuse 4 herausragenden Stromanschluss 8 und das von dem Gehäuse 4 hervorragende Führungselement 12.

In dem Gehäuse 4 ist im Wesentlichen mittig ein zylindrisches Führungsrohr 14 angeordnet. Das Führungsrohr 14 endet in dem Druckrohr-zugewandten Endbereich 40 in dem Druckrohr-Anschluss 6. Der Druckrohr-Anschluss 6 ist in der beispielhaften Ausführungsform der Fig. 2 integral mit dem Führungsrohr 14 ausgebildet. Insbesondere bildet ein Endbereich des Führungsrohrs 14 den Druckrohr-Anschluss 6. In dem Druckrohr-abgewandten Endbereich 42 ist eine Anschlag-Luftfilter-Einheit 30 vorgesehen. Die Anschlag-Luftfilter-Einheit 30 verhindert das Eindringen von Staub in das Führungsrohr 14 und bildet das Ende der Bewegungsbahn des unten beschriebenen, in dem Führungsrohr 14 angeordneten Kolbens. Die mittige Anordnung des Führungsrohrs 14 in dem Gehäuse 4 hilft bei einer möglichst gleichmäßigen Belastung der unten beschriebenen Dichtungen des Kolbens.

Um das Führungsrohr herum ist eine Mehrzahl von Spulen 20 angeordnet, von denen nur eine mit einem entsprechenden Bezugszeichen versehen ist. In der beispielhaften Ausführungsform der Fig. 2 sind zwanzig Spulen 20 vorhanden.

Die Spulen 20 sind kreisförmig um das Führungsrohr 14 herum angeordnet. Sie sind aneinander angrenzend entlang des Führungsrohrs 14 angeordnet, z.B. aneinander auf das Führungsrohr 14 aufgeschoben. Die Mehrzahl von Spulen 20 ist mit dem Stromanschluss 8 verbunden, der einerseits entlang der Spulen 20 von dem Druckrohr-zugewandten Endbereich 40 bis in den Druckrohr-abgewandten Endbereich 42 verläuft und andererseits aus dem Gehäuse 4 hervorsteht, wie in Fig. 2 und auch in Fig. 1 gezeigt. Die Spulen 20 werden über den Stromanschluss 8 mit Energie versorgt.

In der beispielhaften Ausführungsform der Fig. 2 ist der Stromanschluss 8 ein Anschlussprint. Insbesondere ist in dem Stromanschluss 8 für jede der Spulen 20 eine Leiterbahn vorgesehen, um die Spulen 20 mit Strom zu versorgen. Es ist auch möglich, das jeweils mehrere Spulen 20 mit Strom von einer Leiterbahn des Anschlussprints 8 versorgt werden. Insbesondere ist es möglich, dass drei Strom-Phasen über den Anschlussprint 8 zur Verfügung gestellt werden, wobei an jeder Spule 20 eine der drei Strom-Phasen anliegt.

In dem Führungsrohr 14 ist ein Kolben 16 angeordnet. Der Kolben 16 hat auf seiner Druckrohr-zugewandten Seite wie auf seiner Druckrohr-abgewandten Seite jeweils eine Abdichtung 24. Durch die Abdichtungen 24 sind das Luftvolumen zwischen dem Kolben 16 und dem Druckrohr-Anschluss 6 einerseits sowie zwischen dem Kolben 16 und der Anschlag-Luftfilter-Einheit 30 andererseits voneinander getrennt. Der Kolben 16 weist sechs Permanentmagnete 18 auf, die jeweils die gleiche Länge entlang des Kolbens 16 haben. Die Permanentmagnete 18 sind jeweils mit gleichsinnigen Polen zueinander in dem Kolben 16 angeordnet. Eine Beispielhafte Anordnung der Permanentmagnete 18 wäre SN-NS-SN-NS-SN-NS, wobei der Bindestrich jeweils die Grenze zwischen den einzelnen Permanentmagneten bezeichnet. In Fig. 2 sind die Grenzen zwischen den Permanentmagneten 18 durch Doppelstriche gekennzeichnet. Durch die Permanentmagnete 18 erzeugt der Kolben 16 ein Magnetfeld mit alternierenden Süd- und Nordpolen, die durch die Anordnung mit jeweils gegensätzlichen Polen zueinander äußerst trennscharf ausgebildet sind.

In dem Gehäuse 4 ist weiterhin eine Mehrzahl von Magnetfeld-Sensoren 22 angeordnet. Die Magnetfeld-Sensoren 22 sind entlang des Führungsrohrs 14, außerhalb der Mehrzahl von Spulen 20 und entlang einer Wand des Gehäuses 4 angeordnet. Insgesamt sind zwanzig Magnetfeld-Sensoren entlang des Führungsrohrs 14 angeordnet, wobei das Bezugszeichen 22 aus Übersichtlichkeitsgründen nur einmal auftaucht. Die Mehrzahl von Magnetfeld-Sensoren sind im vorliegenden Beispiel Hall-Sensoren. Sie messen das an den jeweiligen Stellen der integrierten Motorkassette 2 vorherrschende Magnetfeld. Die Messwerte können zur Bestimmung der Position des Kolbens 16 herangezogen werden, wie unten beschrieben.

In dem Gehäuse 4 der integrierten Motorkassette 2 ist weiterhin ein Kühlungsschacht 26 angeordnet. Der Kühlungsschacht 26 ist entlang einer Wand des Gehäuses 24 angeordnet, und zwar auf der gegenüberliegenden Seite bezüglich des Führungsrohrs 14 im Vergleich zu der Mehrzahl von Magnetfeld-Sensoren 22. Der Kühlungsschacht 26 erstreckt sich im Wesentlichen von dem Druckrohr-zugewandten Endbereich 40 des Gehäuses 4 zu dem Druckrohr-abgewandten Endbereich 42 des Gehäuses 4. Der Kühlungsschacht 26 hat an beiden Enden eine Öffnung durch das Gehäuse 4, so dass Kühlluft von außen durch den Kühlungsschacht 26 strömen kann.

Der Betrieb der integrierten Motorkassette 2 ist im Folgenden beschrieben. Die Mehrzahl von Spulen 20 werden über den Stromanschluss 8 mit Strom beaufschlagt. Durch das Anlegen geeigneter Ströme an die Mehrzahl von Spulen 20 werden zeitlich veränderliche Magnetfelder erzeugt, welche auf die Permanentmagnete 18 des Kolbens 16 eine mechanische Kraft ausüben und diesen innerhalb des Führungsrohrs 14 bewegen. Es ist dem Fachmann bekannt, wie er den Stromfluss durch die Mehrzahl von Spulen 20 ausgestalten muss, um eine gewünschte Bewegung des Kolbens zu erzielen. Demzufolge kann auf eine genauere Beschreibung der Zusammenhänge zwischen der Bewegung des Kolbens 16 und den anzulegenden Strömen durch die Spulen 20 verzichtet werden.

Während des Betriebs messen die Mehrzahl von Magnetfeld-Sensoren das an den jeweiligen Stellen innerhalb des Gehäuses 4 vorherrschende Magnetfeld. Sie übermitteln die Messwerte über den oben bezüglich Fig. 1 beschriebenen Sensordatenanschluss 10 an eine außerhalb der integrierten Motorkassette 2 gelegene Steuereinheit. Diese Steuereinheit ist in der Lage, aus den Messwerten der Magnetfeld-Sensoren 22 die Position des Kolbens 16 zu bestimmen. Auf Basis dieser Information und auf Basis eines gewünschten Aspirations- bzw. Dispensationsvorgangs beaufschlagt die Steuereinheit die Mehrzahl von Spulen 20 über den Stromanschluss 8 mit entsprechenden Strömen, so dass die gewünschte Bewegung des Kolbens 16 erfolgt. Somit ergibt sich zwischen Kolben 16, Magnetfeld-Sensoren 22, der Steuereinheit, Stromanschluss 8, und Spulen 20 eine Regelschleife, die eine hoch präzise Positionierung des Kolbens 16 innerhalb des Führungsrohrs 14 ermöglicht.

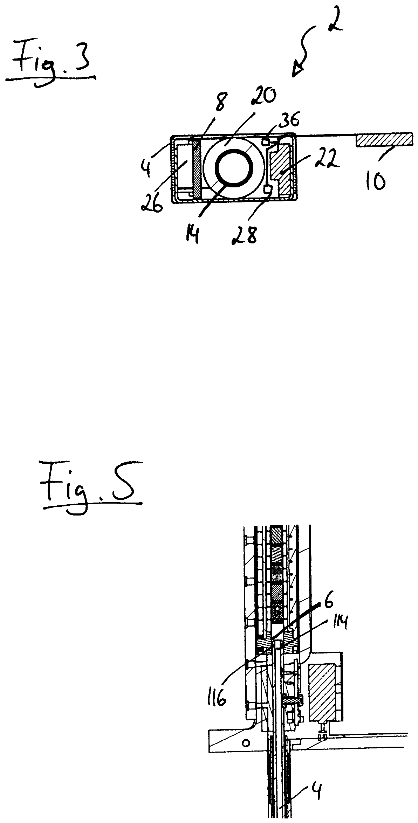

Fig. 3 zeigt die integrierte Motorkassette 2 der Fig. 1 und 2 im Querschnitt. Die Querschnittebene der Fig. 3 ist orthogonal zur Längsschnittebene 2 der Fig. 2. Insbesondere erstreckt sich die Querschnittebene der Fig. 3 entlang der mit AA bezeichneten Achse in Fig. 2. Auch die Fig. 3 zeigt das Führungsrohr 14, eine der um das Führungsrohr 14 herum angeordneten Spulen 20, den Stromanschluss 8, einen der Magnetfeld-Sensoren 22 sowie den Kühlungsschacht 26. Fig. 3 zeigt anschaulich, dass der Kühlungsschacht 26 neben dem Stromanschluss 8 angeordnet ist. Auf diese Weise ist der Kühlungsschacht 26 nah an dem Stromanschluss 8 sowie nah an den Spulen 20 angeordnet, wo die meiste Abwärme entsteht.

In der Querschnittebene von Fig. 3 sind weiterhin ein Temperatursensor 28 und ein Speicherelement 36 angeordnet. Der Temperatursensor 28 misst die Temperatur innerhalb des Gehäuses 4 der integrierten Motorkassette 2. Auf dem Speicherelement 36 sind Kalibrierungsdaten für die integrierte Motorkassette 2 abgelegt. Die Kalibrierungsdaten beinhalten eine Beschreibung der Zusammenhänge zwischen den Messwerten der Magnetfeld-Sensoren 22 und der Position des Kolbens 16. Weiterhin beinhalten die Kalibrierungsdaten eine Beschreibung der von den Magnetfeld-Sensoren 22 detektierten Magnetfeld-Komponenten, die auf den Stromfluss durch die Spulen 20 zurückzuführen sind. Somit kann eine Steuereinheit mit Hilfe der Kalibrierungsdaten aus den Messwerten der Magnetfeld-Sensoren 22 die Magnetfeld-Komponenten, die durch die Spulen 20 bedingt sind, herausrechnen und aus den verbleibenden Magnetfeld-Komponenten die Position des Kolbens 16 berechnen. Die Kalibrierungsdaten können eine Vielzahl von Artefakten bei der Messung der Magnetfelder beschreiben, wie z.B. Offset-Effekte der Magnetfeld-Sensoren, Positionsungenauigkeiten gegenüber der Nominalposition bei den Magnetfeld-Sensoren 22 und Positionsungenauigkeiten gegenüber der Nominalposition bei den Permanentmagneten 18. Die Kalibrierungsdaten können für die gegebene, spezielle integrierte Motorkassette 2 während der Produktion derselben bestimmt werden.

Die Magnetfeld-Sensoren 22, der Temperatursensor 28 und das Speicherelement 36 sind mit dem Sensordatenanschluss 10 verbunden. Die Messwerte der Magnetfeld-Sensoren 22 und des Temperatursensors 28 sowie die in dem Speicherelement 36 vorhandenen Kalibrierungsdaten werden von einer außerhalb der integrierten Motorkassette 4 angeordneten Steuereinheit ausgelesen. Die Steuereinheit ist ausgebildet, auf Basis der Messdaten der Magnetfeld-Sensoren 22 und der Kalibrierungsdaten die Ströme durch die Spulen 20 zu regeln und so den Kolben 26 wie gewünscht zu bewegen.

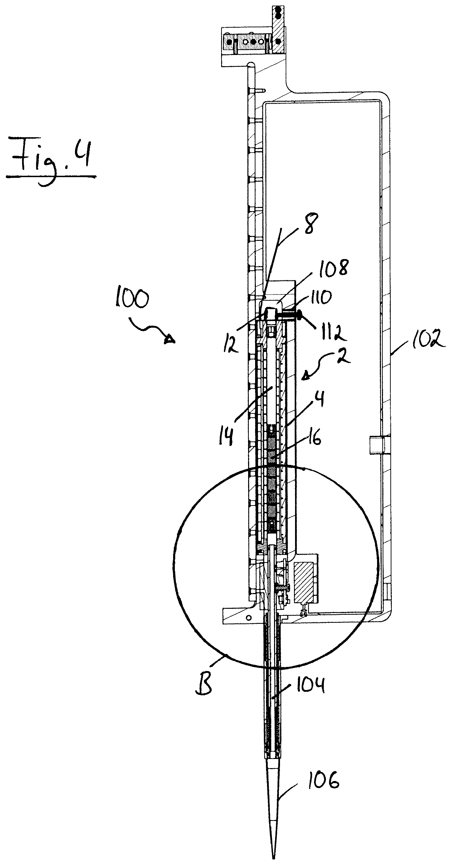

Fig. 4 zeigt die integrierte Motorkassette 2 der Fig. 1 bis 3, eingesetzt in ein Pipettiersystem 100 gemäß einer beispielhaften Ausführungsform der Erfindung. Durch den Anschluss an das Pipettiersystem 100 und die Verwendung in dem Pipettiersystem 100 ist die integrierte Motorkassette 2 Bestandteil des Pipettiersystems 100. Fig. 4 zeigt die integrierte Motorkassette 2 in derselben Längsschnittebene wie Fig. 2. Demzufolge ist auch das Pipettiersystem in dieser Längsschnittebene dargestellt.

Das Pipettiersystem 100 hat ein Gehäuse 102, in dem die integrierte Motorkassette 2 angeordnet ist. Weiterhin hat das Pipettiersystem 100 ein Druckrohr 104 und eine Pipettierspitze 106. Das Druckrohr 104 erstreckt sich von innerhalb des Gehäuses 102, insbesondere von der integrierten Motorkassette 2, nach außerhalb des Gehäuses 102. Das Druckrohr 104 ist ortsfest mit dem Gehäuse 102 des Pipettiersystems verbunden. Das Druckrohr 104 ist an seinem einen Ende mit dem Druckrohr-Anschluss 6 der integrierten Motorkassette verbunden, wie unten mit Bezug auf die vergrößerte Detail-Ansicht der Fig. 5 ausgeführt wird. An seinem anderen Ende ist das Druckrohr 104 mit der Pipettierspitze 106 verbunden. Die Pipettierspitze 106 ist lösbar mit dem Druckrohr 104 verbunden. Insbesondere kann die Pipettierspitze 106 bequem ausgetauscht werden, z.B. wenn auf Grund einer möglichen Kontaminierung der Pipettierspitze mit einer ersten Pipettierflüssigkeit das unverfälschte Pipettieren einer zweiten Pipettierflüssigkeit nicht gewährleistet werden kann.

Das Aspierieren bzw. Dispensieren einer Pipettierflüssigkeit durch die Pipettierspitze 106 erfolgt über den Aufbau bzw. Abbau eines Gasdrucks in dem durch das Führungsrohr 14 der integrierten Motorkassette 2, das Druckrohr 104 und die Pipettierspitze 106 gebildeten Druckluftvolumen. Der Aufbau bzw. Abbau des Gasdrucks erfolgt durch die Bewegung des Kolbens 16 in dem Führungsrohr 14.

In der beispielhaften Ausführungsform der Fig. 4 ist die integrierte Motorkassette 2 folgendermaßen mechanisch an das Pipettiersystem 100 angeschlossen. Der Druckrohr-Anschluss 6 der integrierten Motorkassette 2, d.h. im vorliegenden Beispiel der Endbereich des Führungsrohrs 14 der integrierten Motorkassette 2, ist auf einen freistehenden Endbereich des Druckrohrs 104 aufgesetzt. Das wird unten mit Bezug auf Fig. 5 näher beschrieben. Weiterhin ist das Führungselement 12 in einer Aufnahme 108 angeordnet. Die Aufnahme 108 ist größer als das Führungselement 12. Das Führungselement 12 liegt nicht an den Oberflächen der Aufnahme 108 an. Allerdings ist das Führungselement 12 in dem definierten Bereich der Aufnahme 108 angeordnet.

Das Pipettiersystem 100 hat eine Sicherungsschraube 110, welche in einem Schraubengang 112 des Pipettiersystems 100 angeordnet ist. Insbesondere ist die Sicherungsschraube 110 durch den Schraubengang 112 hindurchgeschraubt, so dass ihr Ende mit dem Führungselement 12 in Eingriff ist. Durch den Eingriff der Sicherungsschraube 110 mit dem Führungselement 12 und den Reibschluss der Sicherungsschraube 110 in dem Schraubengang 112 ist der Druckrohr-abgewandte Endbereich der integrierten Motorkassette 2 in dem Pipettiersystem 100 Lage-fixiert.

Fig. 5 zeigt den Anschluss zwischen integrierter Motorkassette 2 und Druckrohr 104 in größerem Detail. Insbesondere ist Fig. 5 eine vergrößerte Darstellung des in Fig. 4 dargestellten Anschlusses. Der in Fig. 5 dargestellte Bereich entspricht dem in Fig. 4 eingekreisten Bereich B.

Das Druckrohr 104 hat zu der integrierten Motorkassette 2 hin ein freies Ende 114. Um das freie Ende 114 herum ist ein O-Ring 116 angebracht. Der Druckrohr-Anschluss 6 ist auf das freie Ende 114 aufgesteckt. Durch dieses Aufstecken findet eine Lagefixierung der integrierten Motorkassette 2 gegenüber dem Gehäuse 102 des Pipettiersystems 100 statt. Außerdem schafft der O-Ring 116 einen gasdichten Anschluss zwischen dem freien Ende 114 des Druckrohrs 104 und dem Druckrohr-Anschluss 6. Somit entsteht bei Anschluss der integrierten Motorkassette 2 an das Druckrohr 104 ein mit Ausnahme der Öffnung in der Pipettierspitze abgeschlossenes Volumen, bestehend aus einem Teil des Führungsrohrs 14, dem Druckrohr 104 und der Pipettierspitze 106.

Neben dem mit Bezug auf Fig. 4 und 5 oben beschriebenen mechanischen Anschluss zwischen der integrierten Motorkassette 2 und dem Pipettiersystem 100 ist die integrierte Motorkassette 2 auch über den Stromanschluss 8 und den Sensordatenanschluss 10 mit dem Pipettiersystem 100 verbunden. Während der Stromanschluss 8 in Fig. 4 gezeigt ist, befindet sich der Sensordatenanschluss 10 außerhalb der Querschnittsebene von Fig. 4 und 5.

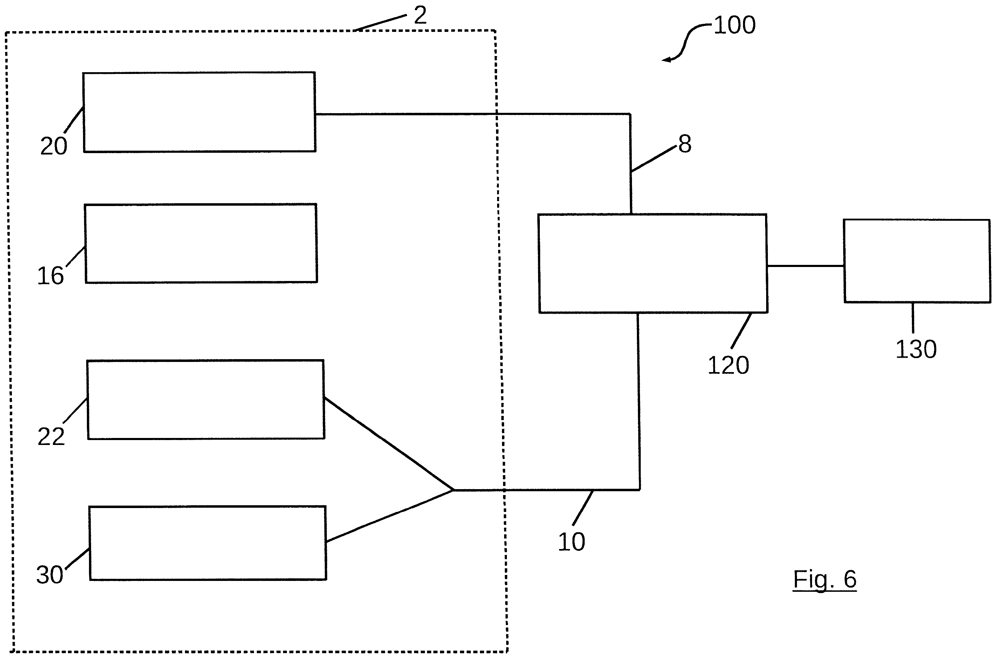

Fig. 6 zeigt die Anschlüsse zwischen der integrierten Motorkassette 2 und dem Pipettiersystem 100 zur Steuerung des Elektromotors der integrierten Motorkassette 2 in einem Blockdiagramm. Das Blockdiagramm der Fig. 6 ist eine abstrakte Darstellung des Pipettiersystems der Fig. 4 und 5 an Hand eines Teils seiner funktionalen Komponenten. Die in der integrierten Motorkassette 2 befindlichen Komponenten sind in einem gestrichelten Rahmen dargestellt, während die außerhalb der integrierten Motorkassette 2 befindlichen Komponenten außerhalb des gestrichelten Rahmens dargestellt sind. Alle Komponenten gehören zu dem Pipettiersystem 100.

Die integrierte Motorkassette 2 ist mit einer Steuereinheit 120 des Pipettiersystems 100 über den Stromanschluss 8 und über den Sensordatenanschluss 10 verbunden. Die Steuereinheit 120 ist weiterhin mit einer Stromversorgung 130 verbunden. Auf der Basis einer gewünschten Bewegung des Kolbens 16 bestimmt die Steuereinheit 120 die Ströme, die an die Spulen 20 anzulegen sind. Die Steuereinheit 120 bezieht Energie von der Stromversorgung 130 und konditioniert die von der Stromversorgung 130 erhaltene Energie derart, dass die für die gewünschte Bewegung des Kolbens 16 benötigten Ströme über den Stromanschluss 8 an den Spulen 20 anliegen.

Die Steuereinheit 120 ist über den Sensordatenanschluss 10 mit der Mehrzahl von Magnetfeld-Sensoren 22 und mit dem Speicherelement 36 verbunden. Das Speicherelement 36 beinhaltet Kalibrierungsdaten bezüglich der Positionsmessung des Kolbens 16. Diese Kalibrierungsdaten werden von der Steuereinheit 120 ausgelesen und für die Bestimmung der Position des Kolbens 16 verwendet. Die Magnetfeld-Sensoren 22 messen das momentan an den Positionen der Magnetfeld-Sensoren 22 vorliegende Magnetfeld. Die Messwerte stellen somit eine räumliche Verteilung des momentanen Magnetfelds dar. Dieses Magnetfeld besteht aus zwei Hauptkomponenten, nämlich einer von dem Strom durch die Sputen 20 erzeugten Komponente und einer von den Permanentmagneten des Kolbens 16 erzeugten Komponente. Die Steuereinheit 120 entfernt mit Hilfe der Kalibrierungsdaten die erstgenannte Komponente des Magnetfelds aus den Messwerten, zumindest zu einem substantiellen Teil. Weiterhin berechnet die Steuereinheit 120 die Position des Kolbens 16 aus der zweitgenannten Komponente mit Hilfe der Kalibrierungsdaten. Die zweitgenannte Komponente hat einen starken periodischen Anteil durch die abwechselnde Orientierung der Permanentmagnete in dem Kolben 16. Die Kalibrierungsdaten beinhalten eine Beschreibung von Offset-Effekten der Magnetfeld-Sensoren 22, von Abweichungen der Positionen der Magnetfeld-Sensoren 22 von einer gleichmäßigen Verteilung entlang des Führungsrohrs und von Abweichungen der Anordnung der Permanentmagnete und ihrer Pole von einer gleichmäßigen Verteilung. Mit Hilfe der Kalibrierungsdaten passt die Steuereinheit 120 die Messwerte der Magnetfeld-Sensoren 22 an und bestimmt die Position des Kolbens 16 mit hoher Präzision. Die Steuereinheit 120 bekommt somit Feedback bezüglich der Position der Kolbens 16 und kann ihn dadurch sehr präzise im Führungsrohr bewegen.

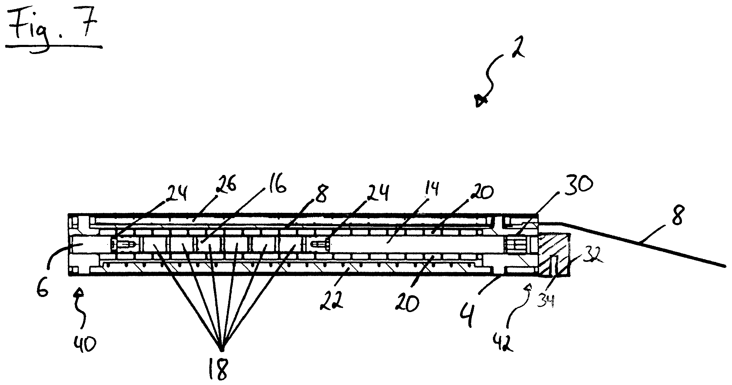

Fig. 7 zeigt eine integrierte Motorkassette 2 gemäß einer weiteren Ausführungsform der Erfindung in einer Längsschnittansicht. Die integrierte Motorkassette 2 der Fig. 7 ist sehr ähnlich zu der integrierten Motorkassette 2 der Fig. 1 bis 3. Außerdem entspricht die Längsschnittebene der Fig. 7 der Längsschnittebene der Fig. 2. Für diejenigen Merkmale der integrierten Motorkassette 2 der Fig. 7, die unten nicht im Detail beschrieben werden, wird auf die Beschreibung der Fig. 1 bis 3, insbesondere der Fig. 2, oben verwiesen.

Die integrierte Motorkassette 2 der Fig. 7 hat kein Führungselement 12, sondern weist eine andere Art der Halterung in dem Druckrohr-angewandten Endbereich 42 des Gehäuses 4 für die Lagefixierung gegenüber einem Pipettiersystem auf. Die integrierte Motorkassette 2 der Fig. 7 hat eine Halterung 32, welche ein Gewindeloch 34 aufweist. Eine Sicherungsschraube eines Pipettiersystems kann in das Gewindeloch 34 eingeschraubt werden und so die integrierte Motorkassette 2 gegenüber dem Pipettiersystem in dem Druckrohr-abgewandten Endbereich 42 des Gehäuses 4 fixieren.

Die integrierten Motorkassetten der oben beschriebenen beispielhaften Ausführungsformen ermöglichen den Austausch des Elektromotors eines Pipettiersystems als Kompletteinheit und reduzieren so den Wartungsaufwand für Pipettiersysteme. Ganz besonders vorteilhaft können die beschriebenen integrierten Motorkassetten bei relativ neuartigen Pipettiersystemen eingesetzt werden, die den Kolben mit sehr hoher Geschwindigkeit für einen Pipettiervorgang vor und zurück bewegen, wobei der Hub des Kolbens um ein Vielfaches höher ist als das Volumen der aspirierten bzw. dispensierten Flüssigkeit und wobei das Aspirieren bzw. Dispensieren der Flüssigkeit über eine mit hoher Dynamik aufgebaute Druckwelle vonstatten geht. Gerade in einem solchen, von hoher Dynamik gekennzeichneten System kann die Abnutzung der Komponenten des Elektromotors hoch sein und sich negativ auf die Performance des Pipettiersystems auswirken. Demzufolge kommt der Wartung bei solchen Pipettiersystemen eine hohe Wichtigkeit zu. Ein solches Pipettiersystem hoher Dynamik ist in WO 2017/0107084 A1 offenbart. Der Inhalt der vorgenannten Anmeldung ist vollumfänglich in die vorliegende Patentanmeldung per Verweis einbezogen. Insbesondere kann das Pipettiersystem der vorliegenden Patentanmeldung mit allen Merkmalen der Patentansprüche der WO 2017/0107084 A1, einzeln oder in beliebiger Kombination, weitergebildet sein.

Obwohl die Erfindung mit Bezug auf beispielhafte Ausführungsformen beschrieben worden ist, ist es für einen Fachmann ersichtlich, dass verschiedene Änderungen vorgenommen und Äquivalente verwendet werden können, ohne den Bereich der Erfindung zu verlassen. Die Erfindung soll nicht durch die beschriebenen spezifischen Ausführungsformen beschränkt sein. Vielmehr enthält sie alle Ausführungsformen, die unter die angehängten Patentansprüche fallen.

## Patentansprüche

1. integrierte Motorkassette (2) zum Anschluss an und zur Verwendung in einem Pipettiersystem, aufweisend:
ein Gehäuse (4),
ein Führungsrohr (14),
einen mit einer Mehrzahl von Permanentmagneten (18) versehenen Kolben (16), wobei der Kolben eine Druckrohr-zugewandte Seite und eine Druckrohr-abgewandte Seite hat, wobei der Kolben in dem Führungsrohr angeordnet ist und wobei der Kolben zumindest eine Abdichtung (24) gegenüber dem Führungsrohr aufweist, und
eine Spulenanordnung (20), durch welche der Kolben bei Strombeaufschlagung der Spulenanordnung in dem Führungsrohr bewegbar ist,
wobei das Führungsrohr, der Kolben und die Spulenanordnung in dem Gehäuse angeordnet sind,
wobei die integrierte Motorkassette (2) weiterhin eine Mehrzahl von Magnetfeld-Sensoren (22) aufweist, die innerhalb des Gehäuses (4) entlang des Führungsrohrs (14) zur Positionsbestimmung des Kolbens (16) angeordnet sind,
wobei die integrierte Motorkassette (2) weiterhin ein Speicherelement (36) aufweist, wobei das Speicherelement mit Kalibrierungsdaten versehen ist, wobei die Kalibrierungsdaten eine Korrelation zwischen Messwerten der Magnetfeld-Sensoren (22) und der Position des Kolbens (16) beschreiben, und
wobei die integrierte Motorkassette weiterhin aufweist:
einen Druckrohr-Anschluss (6), mit dem das Führungsrohr auf der Druckrohr-zugewandten Seite des Kolbens an ein Druckrohr des Pipettiersystems gasdicht anschließbar ist, und
einen Stromanschluss (8), der mit der Spulenanordnung gekoppelt ist und an eine außerhalb der integrierten Motorkassette angeordnete Stromversorgung koppelbar ist,
wobei die integrierte Motorkassette als Einheit in das Pipettiersystem einbringbar und aus dem Pipettiersystem entfernbar ist.

2. Integrierte Motorkassette (2) nach Anspruch 1,
wobei der Druckrohr-Anschluss (6) zur Lagefixierung der integrierten Motorkassette gegenüber dem Pipettiersystem ausgebildet ist;
und/oder
wobei der Druckrohr-Anschluss (6) eine Aufnahme für eine Motor-zugewandte Seite des Druckrohrs aufweist, wobei die Aufnahme insbesondere eine Kontaktfläche für einen um das Druckrohr herum angeordneten O-Ring aufweist.

3. Integrierte Motorkassette (2) nach Anspruch 1 oder 2, wobei der Stromanschluss (8) als Anschlussprint ausgeführt ist, wobei der Anschlussprint insbesondere innerhalb des Gehäuses (4) entlang des Führungsrohrs (14) geführt ist und/oder in einem Druckrohr-abgewandten Endbereich (42) der integrierten Motorkassette durch das Gehäuse (4) geführt ist.

4. Integrierte Motorkassette (2) nach einem der vorhergehenden Ansprüche, weiterhin aufweisend:
einen Sensordatenanschluss (10), der mit der Mehrzahl von Magnetfeld-Sensoren (22) gekoppelt ist und an eine außerhalb der integrierten Motorkassette angeordnete Steuereinheit des Pipettiersystems koppelbar ist.

5. integrierte Motorkassette (2) nach einem der vorhergehenden Ansprüche, wobei die Kalibrierungsdaten weiterhin eine Beschreibung des Einflusses des Stromflusses der Spulenanordnung (20) auf die Messwerte der Magnetfeld-Sensoren (22) beinhalten.

6. Integrierte Motorkassette (2) nach einem der vorhergehenden Ansprüche, wobei die Kalibrierungsdaten von einer Steuereinheit des Pipettiersystems auslesbar sind.

7. Integrierte Motorkassette (2) nach einem der vorhergehenden Ansprüche,
wobei die Größe des Gehäuses (4) auf das Raster des Pipettiersystems, insbesondere auf ein normiertes Rastermaß, abgestimmt ist;
und/oder
wobei das Gehäuse (4) einen im Wesentlichen rechteckigen Querschnitt hat und/oder wobei das Gehäuse (4) im Querschnitt eine Fläche zwischen 50 mm² und 200 mm², insbesondere zwischen 100 mm² und 150 mm², weiter insbesondere zwischen 130 mm² und 140 mm², hat.

8. Integrierte Motorkassette (2) nach einem der vorhergehenden Ansprüche, weiterhin aufweisend einen Kühlungsschacht (26), der innerhalb des Gehäuses (4) entlang des Führungsrohres (14) angeordnet ist und eine erste Öffnung durch das Gehäuse auf der Druckrohr-zugewandten Seite des Gehäuses und eine zweite Öffnung durch das Gehäuse auf der Druckrohr-abgewandten Seite des Gehäuses hat.

9. Integrierte Motorkassette (2) nach einem der vorhergehenden Ansprüche, weiterhin aufweisend eine Halterung (32) an der Druckrohr-abgewandten Seite des Gehäuses (4), mit der die integrierte Motorkassette gegenüber dem Pipettiersystem fixierbar ist, wobei die Halterung insbesondere eine Kontaktfläche aufweist, die mit einer komplementären Kontaktfläche des Pipettiersystems zur Ausrichtung der integrierten Motorkassette in Eingriff bringbar ist, und/oder wobei die Halterung insbesondere ein Führungselement (12) aufweist, das in eine Ausnehmung des Pipettiersystems zur Ausrichtung der integrierten Motorkassette einbringbar ist.

10. Pipettiersystem (100) zum Aspirieren und Dispensieren von Pipettierflüssigkeit, aufweisend:
mindestens ein Druckrohr (104), wobei jedes des mindestens einen Druckrohrs eine Kopplungsvorrichtung zur Ankopplung einer Pipettierspitze (106) an das jeweilige Druckrohr aufweist,
für jedes des mindestens einen Druckrohrs, einen Motorkassettenanschluss zum Verbinden des Pipettiersystems mit jeweils einer integrierten Motorkassette (2) nach einem der vorhergehenden Ansprüche, und
mindestens eine integrierte Motorkassette nach einem der vorhergehenden Ansprüche, die in das Pipettiersystem eingebracht ist.

11. Pipettiersystem (100) nach Anspruch 10, wobei der Motorkassettenanschluss aufweist:
einen Pipettiersystem-seitigen Druckrohr-Anschluss (114), der mit dem Druckrohr-Anschluss (6) der integrierten Motorkassette (2) gasdicht verbindbar ist, wobei der Pipettiersystem-seitige Druckrohr-Anschluss (114) insbesondere ein freies Ende des Druckrohrs (104) umfasst, das in eine entsprechende Aufnahme des Druckrohr-Anschlusses (6) der integrierten Motorkassette (2) einführbar ist.

12. Pipettiersystem (100) nach Anspruch 11, weiterhin aufweisend eine Steuereinheit (120), die eingerichtet ist, eine integrierte Motorkassette (2) zum Aspirieren bzw. Dispensieren von Pipettierflüssigkeit anzusteuern.

13. Pipettiersystem (100) nach Anspruch 12,
wobei die Steuereinheit (120) mit der Spulenanordnung (20) der integrierten Motorkassette (2) koppelbar ist und eingerichtet ist, eine Bewegung des Kolbens (16) zu steuern;
und/oder
wobei die Steuereinheit (120) mit der Mehrzahl von Magnetfeld-Sensoren (22) der integrierten Motorkassette (2) koppelbar ist und eingerichtet ist, auf der Basis von Messwerten der Magnetfeld-Sensoren die Position des Kolbens (16) zu bestimmen;
und/oder
wobei die Steuereinheit (120) mit dem Speicherelement (30) der integrierten Motorkassette (2) koppelbar ist und eingerichtet ist, Kalibrierungsdaten aus dem Datenspeicher auszulesen.

14. Verfahren zum Austauschen einer integrierten Motorkassette (2) eines Pipettiersystems (100) nach einem der Ansprüche 11 bis 13, aufweisend die Schritte:
Entfernen einer ersten integrierten Motorkassette (2) aus dem Pipettiersystem (100), wobei die erste integrierte Motorkassette (2) gemäß einem der Ansprüche 1 bis 9 ausgebildet ist und wobei der Schritt des Entfernens ein Lösen des Druckrohr-Anschlusses (6) der ersten integrierten Motorkassette (2) von einem Pipettiersystem-seitigen Druckrohr-Anschluss (114) aufweist, und
Einsetzen einer zweiten integrierten Motorkassette (2) in das Pipettiersystem (100), wobei die zweite integrierte Motorkassette (2) gemäß einem der Ansprüche 1 bis 9 ausgebildet ist und wobei der Schritt des Einsetzens ein Verbinden des Druckrohr-Anschlusses (6) der zweiten integrierten Motorkassette (2) mit dem Pipettiersystem-seitigen Druckrohr-Anschluss (114) aufweist.

15. Verfahren nach Anspruch 14,
wobei der Schritt des Entfernens der ersten integrierten Motorkassette (2) mindestens einen der folgenden Schritte aufweist:
Lösen des Stromanschlusses (8) der ersten integrierten Motorkassette (2) von einem Pipettiersystem-seitigen Stromanschluss,
Lösen eines Sensordatenanschlusses (10) der ersten integrierten Motorkassette (2) von einem Pipettiersystem-seitigen Sensordatenanschluss,
Lösen einer Halterung an der Druckrohr-abgewandten Seite des Gehäuses (4) der ersten integrierten Motorkassette (2) von dem Pipettiersystem (100); und
wobei der Schritt des Einsetzen der zweiten integrierten Motorkassette (2) mindestens einen der folgenden Schritte aufweist:
Verbinden des Stromanschlusses (8) der zweiten integrierten Motorkassette (2) mit dem Pipettiersystem-seitigen Stromanschluss,
Verbinden eines Sensordatenanschlusses (10) der zweiten integrierten Motorkassette (2) mit dem Pipettiersystem-seitigen Sensordatenanschluss,
Verbinden einer Halterung an der Druckrohr-abgewandten Seite des Gehäuses (4) der zweiten integrierten Motorkassette (2) mit dem Pipettiersystem (100).

## Claims

1. An integrated motor cartridge (2) for connection to and for use in a pipetting system, comprising:
a housing (4),
a guide tube (14),
a piston (16) provided with a plurality of permanent magnets (18), the piston having a pressure tube facing side and a pressure tube distal side, wherein the piston is arranged in the guide tube and wherein the piston has at least one seal (24) with respect to the guide tube, and
a coil assembly (20) by means of which the piston can be moved in the guide tube when current is supplied to the coil assembly,
wherein the guide tube, the piston and the coil assembly are arranged in the housing,
wherein the integrated motor cartridge (2) further comprises a plurality of magnetic field sensors (22) arranged within the housing (4) along the guide tube (14) for determining the position of the piston (16),
wherein the integrated motor cartridge (2) further comprises a memory element (36), the memory element containing calibration data, the calibration data describing a correlation between measured values of the magnetic field sensors (22) and the position of the piston (16), and
wherein the integrated motor cartridge further comprises:
a pressure tube connection (6) by means of which the guide tube, on the pressure tube facing side o fthe piston, can be connected in a gastight manner to a pressure tube of the pipetting system, and
a power connection (8) which is coupled to the coil assembly and adapted to be coupled to a power supply arranged outside of the integrated motor cartridge,
wherein the integrated motor cartridge can be introduced into and removed from the pipetting system as a unit.

2. The integrated motor cartridge (2) according to claim 1,
wherein the pressure tube connection (6) is designed to fix the position of the integrated motor cartridge with respect to the pipetting system;
and/or
wherein the pressure tube connection (6) has a receptacle for a motor facing side of the pressure tube, wherein the receptacle in particular has a contact surface for an O-ring arranged around the pressure tube.

3. The integrated motor cartridge (2) according to claim 1 or 2, wherein the power connection (8) is designed as a printed circuit, wherein the printed circuit is disposed within the housing (4) along the guide tube (14) and/or extends through the housing (4) in a pressure tube distal end portion (42) of the integrated motor cartridge.

4. The integrated motor cartridge (2) according to any of the preceding claims, further comprising:
a sensor data connection (10) coupled to the plurality of magnetic field sensors (22) and adapted to be coupled to a control unit of the pipetting system arranged outside of the integrated motor cartridge.

5. The integrated motor cartridge (2) according to any of the preceding claims, wherein the calibration data further include a description of the influence of the current flow of the coil assembly (20) on the measured values of the magnetic field sensors (22).

6. The integrated motor cartridge (2) according to any of the preceding claims, wherein the calibration data are adapted to be read out by a control unit of the pipetting system.

7. The integrated motor cartridge (2) according to any of the preceding claims, wherein the size of the housing (4) is adapted to the grid of the pipetting system, in particular to a standardized grid pattern;
and/or
wherein the housing (4) has a substantially rectangular cross section and/or wherein the housing (4), in cross section, has an area between 50 mm² and 200 mm², in particular between 100 mm² and 150 mm², still more in particular between 130 mm² and 140 mm².

8. The integrated motor cartridge (2) according to any of the preceding claims, further comprising a cooling duct (26) arranged within the housing (4) along the guide tube (14) and having a first opening through the housing on the pressure tube facing side of the housing and a second opening through the housing on the pressure tube distal side of the housing.

9. The integrated motor cartridge (2) according to any of the preceding claims, further comprising a support (32) on the pressure tube distal side of the housing (4), with which the integrated motor cartridge can be fixed with respect to the pipetting system, wherein the support in particular has a contact surface adapted to be engaged with a complementary contact surface of the pipetting system for alignment of the integrated motor cartridge and/or wherein the support in particular has a guide member (12) adapted to be introduced in a recess of the pipetting system for alignment of the integrated motor cartridge.

10. A pipetting system (100) for aspirating and dispensing pipetting liquid, comprising:
at least one pressure tube (104), each of the at least one pressure tube having a coupling device for coupling a pipetting tip (106) to the respective pressure tube,
for each of the at least one pressure tube, a motor cartridge connection for connecting the pipetting system to a respective integrated motor cartridge (2) according to any of the preceding claims, and
at least one integrated motor cartridge according to any of the preceding claims, inserted into the pipetting system.

11. The pipetting system (100) according to claim 10, wherein the motor cartridge connection comprises:
a pressure tube connection (114) on the side of the pipetting system, which can be connected to the pressure tube connection (6) of the integrated motor cartridge (2) in a gastight manner, wherein the pressure tube connection (114) on the side of the pipetting system in particular comprises a free end of the pressure tube (104) which is adapted to be inserted into a corresponding receptacle of the pressure tube connection (6) of the integrated motor cartridge (2).

12. The pipetting system (100) according to claim 11, further comprising a control unit (120) configured to control an integrated motor cartridge (2) for aspirating and dispensing pipetting liquid.

13. The pipetting system (100) according to claim 12,
wherein the control unit (120) is adapted to be coupled to the coil assembly (20) of the integrated motor cartridge (2) and configured to control a motion of the piston (16);
and/or
wherein the control unit (120) is adapted to be coupled to the plurality of magnetic field sensors (22) of the integrated motor cartridge (2) and is configured to determine the position of the piston (16) on the basis of measured values of the magnetic field sensors;
and/or
wherein the control unit (120) is adapted to be coupled to the memory element (30) of the integrated motor cartridge (2) and configured to read out calibration data from the data memory.

14. A method of replacing an integrated motor cartridge (2) of a pipetting system (100) according to any of claims 11 to 13, comprising the steps of:
removing a first integrated motor cartridge (2) from the pipetting system (100), wherein the first integrated motor cartridge (2) is in accordance with any of claims 1 to 9 and wherein the step of removing comprises releasing the pressure tube connection (6) of the first integrated motor cartridge (2) from a pressure tube connection (114) on the side of the pipetting system, and
inserting a second integrated motor cartridge (2) into the pipetting system (100), wherein the second integrated motor cartridge (2) is in accordance with any of claims 1 to 9 and wherein the step of inserting comprises connecting the pressure tube connection (6) of the second integrated motor cartridge (2) to the pressure tube connection (114) on the side of the pipetting system.

15. The method according to claim 14,
wherein the step of removing the first integrated motor cartridge (2) comprises at least one of the following steps:
releasing the power connection (8) of the first integrated motor cartridge (2) from a power connection on the side of the pipetting system,
releasing a sensor data connection (10) of the first integrated motor cartridge (2) from a sensor data connection on the side of the pipetting system,
releasing a support on the pressure tube distal side of the housing (4) of the first integrated motor cartridge (2) from the pipetting system (100); and wherein the step of inserting the second integrated motor cartridge (2) comprises at least one of the following steps:
connecting the power connection (8) of the second integrated motor cartridge (2) to the power connection on the side of the pipetting system,
connecting a sensor data connection (10) of the second integrated motor cartridge (2) to the sensor data connection on the side of the pipetting system,
connecting a support on the pressure tube distal side of the housing (4) of the second integrated motor cartridge (2) to the pipetting system (100).

## Revendications

1. Cassette de moteur intégrée (2) destinée à être raccordée et utilisée dans un système de pipetage, présentant :
un boîtier (4),
un tube de guidage (14),
un piston (16) muni d'une pluralité d'aimants permanents (18), le piston ayant un côté faisant face au tube de pression et un côté opposé au tube de pression, le piston étant disposé dans le tube de guidage et le piston présentant au moins un joint d'étanchéité (24) par rapport au tube de guidage, et
un agencement de bobines (20) par lequel le piston peut être déplacé dans le tube de guidage lorsque l'agencement de bobines est alimenté en courant,
le tube de guidage, le piston et l'agencement de bobines étant disposés dans le boîtier,
la cassette de moteur intégrée (2) présentant en outre une pluralité de capteurs de champ magnétique (22) disposés à l'intérieur du boîtier (4) le long du tube de guidage (14) pour déterminer la position du piston (16),
la cassette de moteur intégrée (2) présentant en outre un élément de stockage (36), l'élément de stockage étant pourvu de données d'étalonnage, les données d'étalonnage décrivant une corrélation entre des valeurs de mesure des capteurs de champ magnétique (22) et la position du piston (16), et la cassette de moteur intégrée présentant en outre :
un raccord de tube de pression (6), avec lequel le tube de guidage peut être raccordé de manière étanche aux gaz à un tube de pression du système de pipetage sur le côté du piston tourné vers le tube de pression, et
un raccord électrique (8), qui est couplé à l'agencement de bobines et peut être couplé à une alimentation électrique disposée à l'extérieur de la cassette de moteur intégrée,
la cassette de moteur intégrée pouvant être introduite dans le système de pipetage et retirée du système de pipetage en tant qu'unité.

2. La cassette de moteur intégrée (2) selon la revendication 1,
dans laquelle le raccord de tube de pression (6) est conçu pour fixer la position de la cassette de moteur intégrée par rapport au système de pipetage ;
et/ou
dans laquelle le raccord de tube de pression (6) présente un logement pour un côté du tube de pression tourné vers le moteur, le logement présentant en particulier une surface de contact pour un joint torique disposé autour du tube de pression.

3. La cassette de moteur intégrée (2) selon la revendication 1 ou 2, dans laquelle le raccord électrique (8) est réalisé sous la forme d'une carte de raccordement, la carte de raccordement étant notamment guidée à l'intérieur du boîtier (4) le long du tube de guidage (14) et/ou étant guidée à travers le boîtier (4) dans une zone d'extrémité (42) opposée au tube de pression de la cassette de moteur intégrée.

4. La cassette de moteur intégrée (2) selon l'une quelconque des revendications précédentes, présentant en outre :
un raccord de données de capteurs (10) qui est couplé à la pluralité de capteurs de champ magnétique (22) et qui peut être couplé à une unité de commande du système de pipetage disposée à l'extérieur de la cassette de moteur intégrée.

5. La cassette de moteur intégrée (2) selon l'une quelconque des revendications précédentes, dans laquelle les données d'étalonnage comprenant en outre une description de l'influence du flux de courant de l'agencement de bobines (20) sur les valeurs de mesure des capteurs de champ magnétique (22).

6. La cassette de moteur intégrée (2) selon l'une quelconque des revendications précédentes, dans laquelle les données d'étalonnage peuvent être lues par une unité de commande du système de pipetage.

7. La cassette de moteur intégrée (2) selon l'une quelconque des revendications précédentes,
dans laquelle la taille du boîtier (4) est adaptée à la trame du système de pipetage, en particulier à une dimension de trame normalisée ;
et/ou
dans laquelle le boîtier (4) a une section transversale essentiellement rectangulaire et/ou dans laquelle le boîtier (4) a une surface en section transversale comprise entre 50 mm² et 200 mm², en particulier entre 100 mm² et 150 mm², plus particulièrement entre 130 mm² et 140 mm².

8. La cassette de moteur intégrée (2) selon l'une quelconque des revendications précédentes, présentant en outre un puits de refroidissement (26) disposé à l'intérieur du boîtier (4) le long du tube de guidage (14) et ayant une première ouverture à travers le boîtier sur le côté du boîtier faisant face au tube de pression et une seconde ouverture à travers le boîtier sur le côté du boîtier opposé au tube de pression.

9. La cassette de moteur intégrée (2) selon l'une quelconque des revendications précédentes, présentant en outre un support (32) sur le côté du boîtier (4) opposé au tube de pression, avec lequel la cassette de moteur intégrée peut être fixée par rapport au système de pipetage, le support présentant notamment une surface de contact, qui peut être mise en prise avec une surface de contact complémentaire du système de pipetage pour l'orientation de la cassette de moteur intégrée, et/ou le support présentant en particulier un élément de guidage (12) qui peut être inséré dans un logement du système de pipetage pour l'orientation de la cassette de moteur intégrée.

10. Système de pipetage (100) destiné à aspirer et distribuer un liquide de pipetage, présentant :
au moins un tube de pression (104), chacun des tubes de pression, un au moins, présentant un dispositif de couplage pour coupler un embout de pipetage (106) au tube de pression respectif,
pour chacun des tubes de pression, un au moins, un raccord de cassette de moteur pour raccorder le système de pipetage à une cassette de moteur intégrée respective (2) selon l'une quelconque des revendications précédentes, et
au moins une cassette de moteur intégrée selon l'une quelconque des revendications précédentes, qui est incorporée au système de pipetage.

11. Le système de pipetage (100) selon la revendication 10, dans lequel le raccord de cassette de moteur présente :
un raccord de tube de pression (114) côté système de pipetage, qui peut être relié de manière étanche aux gaz au raccord de tube de pression (6) de la cassette de moteur intégrée (2), le raccord de tube de pression (114) côté système de pipetage comprenant en particulier une extrémité libre du tube de pression (104), qui peut être introduite dans un logement correspondant du raccord de tube de pression (6) de la cassette de moteur intégrée (2).

12. Le système de pipetage (100) selon la revendication 11, présentant en outre une unité de commande (120) qui est conçue pour commander une cassette de moteur intégrée (2) pour l'aspiration ou la distribution de liquide de pipetage.

13. Le système de pipetage (100) selon la revendication 12,
dans lequel l'unité de commande (120) peut être couplée à l'agencement de bobines (20) de la cassette de moteur intégrée (2) et est conçue de manière à commander un mouvement du piston (16) ;
et/ou
dans lequel l'unité de commande (120) peut être couplée avec la pluralité de capteurs de champ magnétique (22) de la cassette de moteur intégrée (2) et est conçue de manière à déterminer la position du piston (16) sur la base des valeurs de mesure des capteurs de champ magnétique ;
et/ou
dans lequel l'unité de commande (120) peut être couplée à l'élément de stockage (30) de la cassette de moteur intégrée (2) et est conçue de manière à lire des données d'étalonnage à partir du stockage des données.

14. Procédé de remplacement d'une cassette de moteur intégrée (2) d'un système de pipetage (100) selon l'une quelconque des revendications 11 à 13, présentant les étapes suivantes :
retrait d'une première cassette de moteur intégrée (2) du système de pipetage (100), la première cassette de moteur intégrée (2) étant réalisée selon l'une quelconque des revendications 1 à 9 et l'étape de retrait comprenant le détachement du raccord de tube de pression (6) de la première cassette de moteur intégrée (2) d'un raccord de tube de pression (114) côté système de pipetage, et
insertion d'une deuxième cassette de moteur intégrée (2) dans le système de pipetage (100), la deuxième cassette de moteur intégrée (2) étant réalisée selon l'une quelconque des revendications 1 à 9 et l'étape d'insertion comprenant le raccordement du raccord de tube de pression (6) de la deuxième cassette de moteur intégrée (2) au raccord de tube de pression (114) côté système de pipetage.

15. Procédé selon la revendication 14,
dans lequel l'étape de retrait de la première cassette de moteur intégrée (2) présente au moins l'une des étapes suivantes :
débranchement du raccord électrique (8) de la première cassette de moteur intégrée (2) d'un raccord électrique côté système de pipetage,
débranchement du raccord de données de capteurs (10) de la première cassette de moteur intégrée (2) d'un raccord de données de capteurs côté système de pipetage,
détachement d'un support sur le côté du boîtier (4) opposé au tube de pression de la première cassette de moteur intégrée (2) du système de pipetage (100) ; et
dans lequel l'étape d'insertion de la deuxième cassette de moteur intégrée (2) présente au moins l'une des étapes suivantes :
raccordement du raccord électrique (8) de la deuxième cassette de moteur intégrée (2) au raccord électrique côté système de pipetage,
raccordement d'un raccord de données de capteurs (10) de la deuxième cassette de moteur intégrée (2) au raccord de données de capteurs côté système de pipetage,
raccordement d'un support sur le côté du boîtier (4) opposé au tube de pression de la deuxième cassette de moteur intégrée (2) au système de pipetage (100).
